# EUROPÄISCHE PATENTANMELDUNG

(11) **EP 2 468 559 A2**
(43) Veröffentlichungstag der Anmeldung: **27.06.2012**
(21) Anmeldenummer: 11009835.7
(22) Anmeldetag: 14.12.2011
(51) Int. Cl.: B60K 15/035

(54) **Einrichtung zur Entlüftung und Belüftung eines Kraftstofftanks**

(30) Priorität: 21.12.2010 DE 102010055312
(71) Anmelder: Audi AG, 85045 Ingolstadt (DE)
(72) Erfinder: Hagen, Harald, 95473 Creussen (DE)
(74) Vertreter: Lehle, Josef

(57) **Zusammenfassung**

Die Erfindung betrifft eine Einrichtung zur Entlüftung und Belüftung eines Kraftstofftanks, mit einem Tankabsperrventil (2) und zwei Tankdruckregelventilen (3, 4), von denen eines im Falle eines Unterdrucks im Kraftstofftank und eines im Falle eines Überdrucks im Kraftstofftank öffnet, wobei eine aus einem (2) oder mehreren (3, 4; 2, 3, 4) der Ventile (2, 3, 4) bestehende Ventileinheit (41; 29, 30; 1) stehend und liegend montierbar ist und einen mit dem Kraftstofftank kommunizierenden Tankanschluss (8; 33) und einen mit einem Aktivkohlefilter kommunizierenden Filteranschluss (9; 34) aufweist. Damit sich die Ventileinheiten (41; 29, 30; 1) ohne eine Beeinträchtigung des Ablaufs von Kondensat in verschiedenen Einbaulagen verbauen lassen, wird erfindungsgemäß vorgeschlagen, dass die beiden Anschlüsse (8, 9; 33, 34) allgemein parallel ausgerichtet sind, wobei sie bei stehender Einbaulage der Ventileinheit (1; 41; 30) nach unten und bei liegender Einbaulage der Ventileinheit (1; 41; 29) in seitliche Richtung(en) weisen und an oder nahe der Unterseite der Ventileinheit (1; 41; 29) angeordnet sind.

## Beschreibung

Die Erfindung betrifft eine Einrichtung zur Entlüftung und Belüftung eines Kraftstofftanks gemäß dem Oberbegriff des Anspruchs 1.

Einrichtungen der eingangs genannten Art werden bei Kraftfahrzeugen zwischen dem Kraftstofftank und einem Aktivkohlefilter vorgesehen, der einen unerwünschten Austritt von flüchtigen Kohlenwasserstoffen aus dem Kraftstofftank in die Umgebung des Kraftfahrzeugs verhindern soll. Bei dem Tankäbsperrventil handelt es sich um ein steuerbares Ventil, wie beispielsweise ein Elektromagnetventil, das normalerweise geschlossen ist und während des Betankens des Kraftstofftanks geöffnet wird, um ein aus dem Kraftstofftank verdrängtes Gasgemisch durch den Aktivkohlefilter zu leiten und die im Gasgemisch enthaltenen Kohlenwasserstoffe (HC) zu adsorbieren, so dass nur gereinigte Luft in die Umgebung gelangt. Bei den beiden Tankdruckregelventilen handelt es sich um ein Überdruckventil und ein Unterdruckventil, die ebenfalls normalerweise geschlossen sind. Das Überdruckventil öffnet sich selbsttätig, wenn sich zum Beispiel bei einem Anstieg der Umgebungstemperaturen oder während einer Nachheizphase nach dem Abstellen der Brennkraftmaschine aufgrund einer Verdunstung von Kraftstoff im Inneren des Kraftstofftanks ein vorbestimmter Überdruck einstellt, während sich das Unterdruckventil selbsttätig öffnet, wenn zum Beispiel bei sinkenden Umgebungstemperaturen Kraftstoff im Inneren des Kraftstofftanks kondensiert und sich infolgedessen im Kraftstofftank ein vorbestimmter Unterdruck einstellt.

Bekannte Einrichtungen dieser Art sind gewöhnlich als Ventileinheit oder Ventilbaugruppe ausgebildet, in der das Tankabsperrventil und die beiden als Bypassventile ausgebildeten Tankdruckregelventile zusammengefasst sind. Diese Ventileinheiten sind bauartbedingt zumeist so ausgebildet, dass ein mit dem Kraftstofftank kommunizierender Tankanschluss und ein mit dem Aktivkohlefilter kommunizierender Filteranschluss der Ventileinheit in unterschiedliche Richtungen weisen bzw. in unterschiedlichen Richtungen über die Ventileinheit überstehen. Dadurch ist nur in einer einzigen Einbaulage der Ventileinheit ein optimaler Ablauf von Kondensat gewährleistet, während es in anderen Einbaulagen innerhalb der Ventileinheit zu so genannten Totkraftstoffbereichen kommen kann, aus denen Kondensat nicht mehr abfließen kann. Wenn das Kondensat Feuchtigkeit enthält, kann dies bei niedrigen Umgebungstemperaturen zu einem Gefrieren und vor allem beim Tankabsperrventil zu einer Beschädigung oder Zerstörung des Ventils führen.

Ausgehend hiervon liegt der Erfindung die Aufgabe zugrunde, eine Einrichtung der eingangs genannten Art dahingehend zu verbessern, dass sich die Ventileinheit ohne eine Beeinträchtigung des Ablaufs von Kondensat in verschiedenen Einbaulagen verbauen lässt.

Diese Aufgabe wird erfindungsgemäß dadurch gelöst, dass die beiden Anschlüsse allgemein parallel ausgerichtet sind, wobei sie bei stehender Einbaulage der Ventileinheit nach unten und bei liegender Einbaulage der Ventileinheit in seitliche Richtung(en) weisen und an oder nahe der Unterseite der Ventileinheit angeordnet sind. Da in diesem Fall beide Anschlüsse zwischen der stehenden Einbaulage und der liegenden Einbaulage schräg nach unten weisen, ist durch die erfindungsgemäßen Merkmale auch in sämtlichen Einbaulagen zwischen der stehenden und der liegenden Einbaulage ein ungehinderter Ablauf von Kondensat aus der Ventileinheit sichergestellt.

Eine bevorzugte Ausgestaltung der Erfindung sieht vor, dass die Ventileinheit zwei in Bezug zueinander drehbare Teile umfasst, von denen eines mit Befestigungsmitteln zum Befestigen der Ventileinheit an einer Halterung und eines mit den beiden Anschlüssen versehen ist. Dadurch können in einer liegenden oder schrägen Einbaulage der Ventileinheit die beiden Anschlüsse ungeachtet der Ausrichtung der zur Montage der Ventileinheit dienenden Halterung in einfacher Weise durch Drehen des mit den Anschlüssen versehenen Teils in Bezug zu dem anderen Teil in diejenige Stellung gedreht werden, in der sie sich unterhalb der Drehachse an der tiefstmöglichen Stelle befinden. Vorzugsweise weist die Ventileinheit Mittel auf, mit denen sich die beiden Teile in Bezug zueinander in einer beliebigen Drehlage fixieren lassen, wie beispielsweise einen Spannring.

Diese Ausgestaltung ist besonders gut geeignet, wenn die Ventileinheit das Tankabspenventil umfasst, das in der Regel als Magnetventil mit einem Ventilteil und einem Betätigungsteil ausgebildet ist. In diesem Fall ist zweckmäßig der Ventilteil zusammen mit den beiden Anschlüssen um eine Längsmittelachse des Tankabsperrventils in Bezug zu dem Betätigungsteil drehbar, der neben den Befestigungsmitteln zweckmäßig eine Elektromagnetspule und einen Anker zur Betätigung des Tankabspenventils umfasst.

Vor allem bei Ventileinheiten mit einem Tankabsperrventil wird ein besonders guter Kondensatablauf auch dadurch erreicht, dass gemäß einer weiteren bevorzugten Ausgestaltung der Erfindung jeder der beiden Anschlüsse in einen Innenraum der Ventileinheit mündet, wobei die Einmündungen der Anschlüsse in die Innenräume sowohl bei stehender und bei liegender Einbaulage des Tankabsperrventils an der tiefsten Stelle des jeweiligen Innenraums angeordnet sind. Damit das Kondensat noch leichter in die Einmündungen der Anschlüsse abläuft, sind diese mindestens zum Teil von schrägen, zu den Einmündungen hin nach unten geneigten Flächen umgeben. Die beiden Anschlüsse der Ventileinheit weisen bei liegender Einbaulage vorzugsweise in dieselbe Richtung, so dass sie bei stehender Einbaulage beide nach unten weisen.

Ein vorteilhafte Erfindungsalternative sieht vor, dass die Ventileinheit sowohl die beiden Tankdruckregelventile als auch das mit den beiden Anschlüssen versehene Tankabsperrventil umfasst, und dass die beiden Tankdruckregelventile so am Tankabsperrventil montiert sind, dass sie durch dieses hindurch mit den beiden Anschlüssen kommunizieren. In diesem Fall sind für alle drei Ventile zwei Anschlüsse ausreichend.

Bei einer anderen Erfindungsalternative umfasst die Ventileinheit nur das Tankabsperrventil oder nur die beiden Tankdruckregelventile, was den Vorteil hat, dass das Tankabsperrventil und die beiden Tankdruckregelventile getrennt voneinander und/oder in unterschiedlichen Einbaulagen montiert werden können, zum Beispiel die beiden Tankdruckregelventile innerhalb des Kraftstofftanks und das Tankabsperrventil außerhalb des Kraftstofftanks.

Der grundsätzliche Aufbau der Tankdruckregelvenfile ist bei beiden Erfindungsaltemativen derselbe: Jedes Tankdruckregelventil umschließt zwei durch eine Membran getrennte Kammem, von denen eine mit dem Tankanschluss und eine mit dem Filteranschluss kommuniziert. Die Membran weist eine Öffnung auf und wird von einer Feder um die Öffnung herum gegen das freie Ende eines Rohrstutzens angepresst, der eine der Kammem durchsetzt und durch die Öffnung in die andere Kammer mündet, in der sich die Feder befindet. Die Verbindung zwischen den beiden Kammem und dem Tankanschluss bzw. dem Filteranschluss ist beim Überdruckventil und beim Unterdruckventil jeweils umgekehrt: Beim Überdruckventil kommuniziert die den Rohrstutzen umgebende Kammer mit dem Kraftstofftank und die mit der Feder bestückte Kammer mit dem Aktivkohlefilter. Wenn sich im Kraftstofftank ein Überdruck einstellt, der den Öffnungsdruck des Überdruckventils übersteigt, wird die Membran vom Überdruck entgegen der Kraft der Feder vom Rohrstutzen abgehoben, so dass die beiden Kammem miteinander verbunden werden. Beim Unterdruckventil kommuniziert die mit der Feder bestückte Kammer mit dem Kraftstofftank und die den Rohrstutzen umgebende Kammer mit dem Aktivkohlefilter. Wenn sich im Kraftstofftank ein Unterdruck einstellt, der den Öffnungsdruck des Unterdruckventils übersteigt, wird die Membran vom Unterdruck entgegen der Kraft der Feder vom Rohrstutzen abgehoben, so dass die beiden Kammem ebenfalls miteinander verbunden werden.

Vorteilhaft werden Ventileinheiten mit zwei Tankdruckregelventilen verwendet, so dass die Ventileinheit mit nur zwei Anschlüssen auskommt. Um Kondensatansammlungen in den Kammem der Tankdruckregelventile zu verhindern, sind diese vorteilhaft so gestaltet, dass sie jeweils an ihrer tiefsten Stelle durch eine Öffnung oder einen Durchlass mit einem der beiden Anschlüsse kommunizieren.

Im Folgenden wird die Erfindung anhand von einigen in der Zeichnung dargestellten Ausführungsbeispielen näher erläutert. Es zeigen
Fig. 1 eine Seitenansicht einer Ventileinheit mit einem Tankabsperrventil und zwei Tankdruckregelventilen;
Fig. 2 eine Unterseitenansicht der Ventileinheit aus Fig. 1;
Fig. 3 eine Schnittansicht des Tankabsperrventils entlang der Linie III-III der Fig. 2 zur Erläuterung des Kondensatablaufs bei stehendem Einbau;
Fig. 4 eine Schnittansicht des Tankabsperrventils entlang der Linie IV-IV der Fig. 2 zur Erläuterung des Kondensatablaufs bei stehendem Einbau;
Fig. 5 eine schematische Schnittansicht des Tankabspenventils zur Erläuterung des Kondensatablaufs bei liegendem Einbau;
Fig. 6a und 6b unterschiedliche Schnittansichten der beiden Tankdruckregelventile;
Fig. 7 eine perspektivische Ansicht eines anderen Tankabsperrventils;
Fig. 8 eine perspektivische Ansicht einer Ventileinheit aus zwei Tankdruckregelventilen;
Fig. 9 eine Seitenansicht der Ventileinheit aus Fig. 8;
Fig. 10 eine Längsschnittansicht der Ventileinheit aus Fig. 8 und 9;
Fig. 11 eine perspektivische Ansicht einer anderen Ventileinheit aus zwei Tankdruckregelventilen;
Fig. 12 eine Seitenansicht der Ventileinheit aus Fig. 11;
Fig. 13 eine Querschnittsansicht der Ventileinheit aus Fig. 11 und 12.

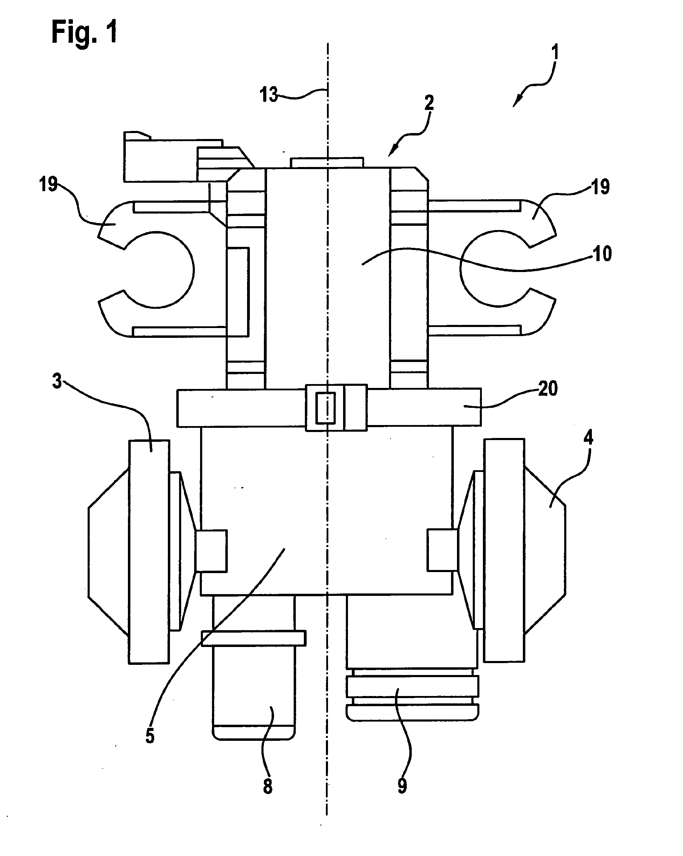

Die in den Figuren 1 bis 4 dargestellte Ventileinheit 1 dient zur Entlüftung und Belüftung eines Kraftstofftanks (nicht dargestellt) und ist zum Einbau zwischen dem Kraftstofftank und einem Aktivkohlefilter (nicht dargestellt) bestimmt, der bei einer Entlüftung oder Belüftung des Kraftstofftanks einen Austritt von flüchtigen Kohlenwasserstoffen in die Atmosphäre oder Umgebung verhindert.

Die Ventileinheit 1 besteht im Wesentlichen aus einem Tankabsperrventil 2 und zwei voneinander getrennten Tankdruckregelventilen 3, 4, die an entgegengesetzten Seiten des Tankabsperrventils 2 angeordnet sind.

Das Tankabsperrventil 2 ist ein Elektromagnetventil, das aus zwei drehbar miteinander verbundenen Teilen besteht, nämlich einem Venfilteil 5 mit einem Ventilsitz 6, einem in Bezug zum Ventilsitz 6 beweglichen Ventilglied 7 und zwei Anschlüssen 8, 9, d.h. einem mit dem Kraftstofftank verbindbaren Tankanschluss 8 und einem mit einem Aktivkohlefilter verbindbaren Filteranschluss 9, sowie einem Ventilbetäfigungsteil 10 mit einer Elektromagnetspule 11 und einem auf das Ventilglied 7 einwirkenden Anker 12. Wenn die Elektromagnetspule 11 erregt wird, hebt der Anker 12 das Ventilglied 7 vom Ventilsitz 6 ab, woraufhin die beiden Anschlüsse 8, 9 miteinander kommunizieren.

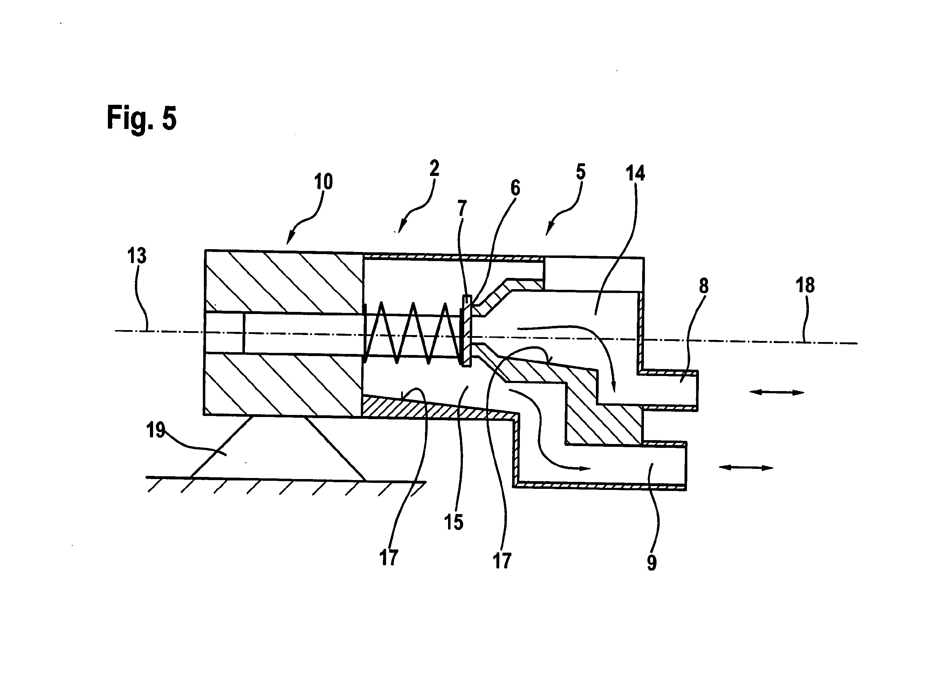

Wie am besten in den Figuren 1, 3, 4 und 5 dargestellt, kann die Ventileinheit 1 in verschiedenen Einbaulagen montiert werden, nämlich stehend, wie in Fig. 1, 3 und 4 dargestellt, d.h. mit vertikaler Längsmittelachse 13, oder liegend, wie in Fig. 5 schematisch ohne die beiden Tankdruckregelventile 3, 4 dargestellt, d.h. mit horizontaler Längsmittelachse 13. Selbstverständlich kann die Ventileinheit 1 auch in einer beliebigen schrägen Einbaulage zwischen stehend und liegend montiert werden.

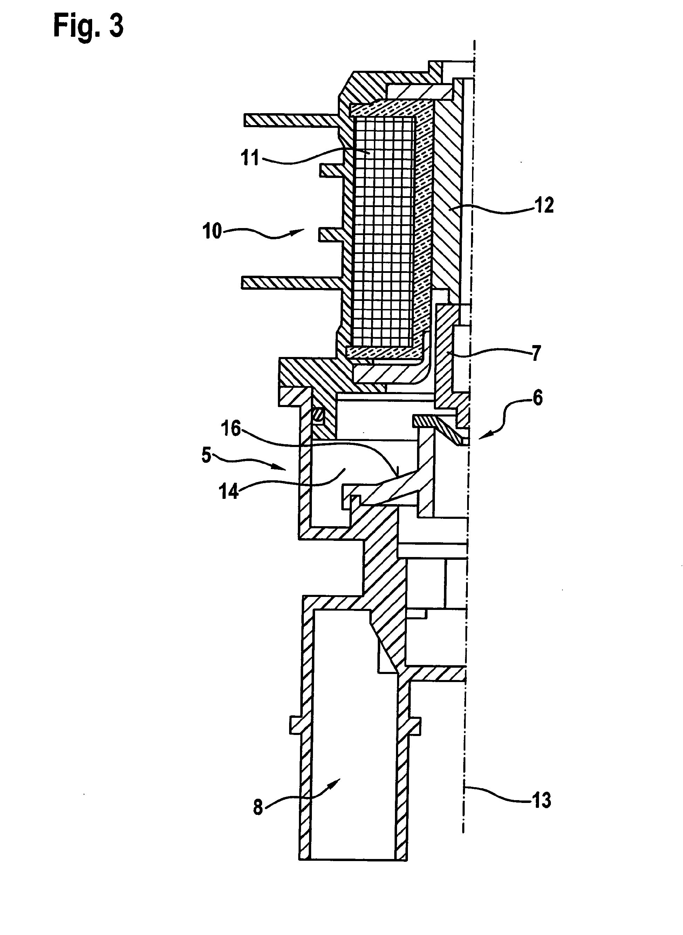

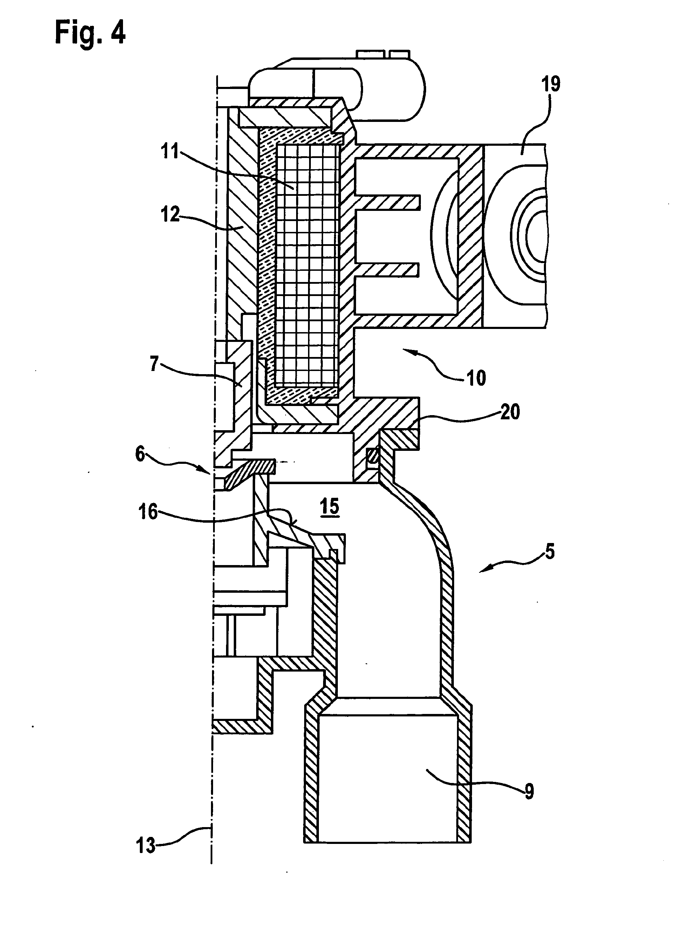

Um zu verhindern, dass sich in einer dieser Einbaulagen im Inneren des Tankabsperrventils 2 flüssiges Kondensat ansammeln kann, ist das Tankabsperrventil 2 so konstruiert, dass bei stehendem Einbau der Tankanschluss 8 und der Filteranschluss 9 an der Unterseite des Ventilteils 5 angeordnet sind, nach unten über den Ventilteil 5 überstehen und sich beide nach unten zu öffnen, wie in Fig. 1, 3 und 4 dargestellt. Darüber hinaus ist jeder der beiden Anschlüsse 8, 9 derart mit einem mit dem Tankanschluss 8 bzw. mit dem Filteranschluss 9 kommunizierenden Innenräumen 14 bzw. 15 des Tankabsperrventils 2 verbunden, dass in den Innenräumen 14, 15 kondensierender Kraftstoffdampf vollständig in den Anschluss 8, 9 fließt, der sowohl bei stehendem und bei liegendem Einbau des Ventils 1 von unten her in den Innenraum 14 bzw. 15 mündet, wie am besten in Fig. 3 und 4 bzw. 5 dargestellt. Um den Ablauf von Kondensat aus den Innenräumen 14, 15 in die Anschlüsse 8 bzw. 9 zu erleichtern, werden beide Innenräume 14, 15 bei stehendem Einbau (Fig. 3 und 4) nach unten zu von schrägen Flächen 16 und bei liegendem Einbau nach unten zu von schrägen Flächen 17 begrenzt, die zu den Einmündungen der Anschlüsse 8, 9 hin nach unten geneigt sind. Bei geschlossenem Ventil 2 sind die Innenräume 14, 15 durch das Ventilglied 7 voneinander getrennt.

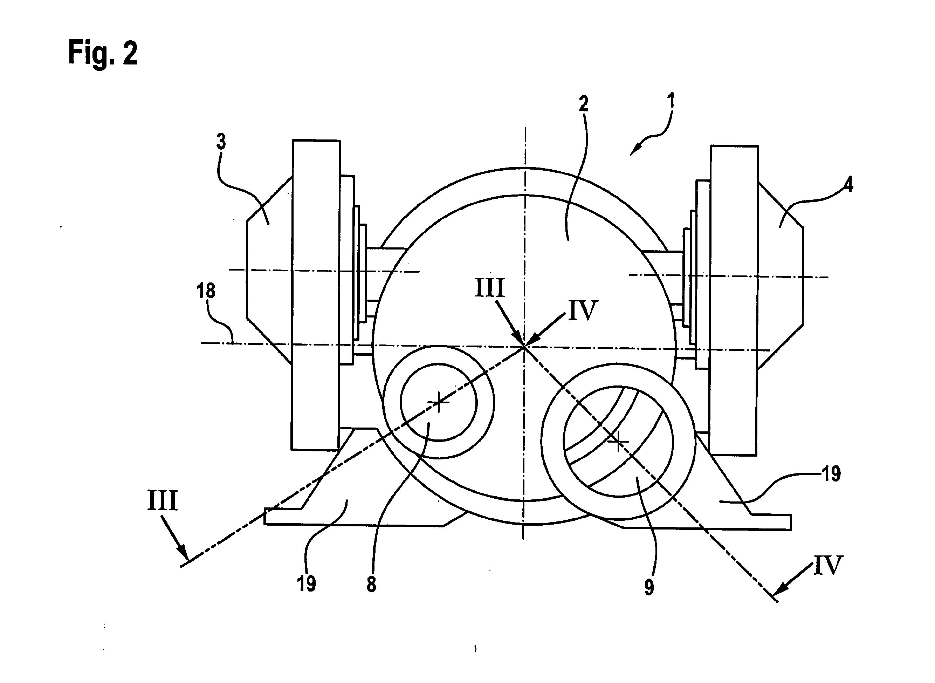

Weiter ist das Tankabspenventil 2 so konstruiert, dass beide Anschlüsse 8, 9 auf einer Seite einer Längsmittelebene 18 (Fig. 2) des Tankabsperrventils 2 angeordnet sind, welche bei stehendem Einbau vertikal ausgerichtet ist, und dass der Ventilteil 5 in Bezug zu dem mit Befestigungsmitteln 19 versehenen Ventilbetätigungsteil 10 um die Längsmittelachse 13 des Tankabsperrventils 2 drehbar und in einer beliebigen Drehlage fixierbar ist, wie am besten in Fig. 1, 3 und 4 durch einen Spannring 20 dargestellt, so dass der Ventilteil 5 bei liegendem Einbau ungeachtet der Ausrichtung der Befestigungsmittel 19 immer in eine Stellung gedreht werden kann, in der die beiden Anschlüsse 8, 9 unterhalb von der Längsmittelebene 18 angeordnet sind und sich nach einer Seite zu öffnen, wie in Fig. 5 dargestellt. Darüber hinaus ist der Tankanschluss 8 derart mit dem Innenraum 14 und der Filteranschluss 9 derart mit dem Innenraum 15 verbunden, dass in den Innenräumen 14, 15 kondensierender Kraftstoffdampf vollständig in den von unten her in den Innenraum 14, 15 mündenden Anschluss 8 bzw. 9 fließt, wie in Fig. 5 dargestellt. Damit können in jeder Einbaulage zwischen stehend und liegend Totkraftstoffbereiche vermieden werden.

Die beiden als Ventileinheit mit dem Tankabsperrventil 2 ausgebildeten Tankdruckregelventile 3, 4 sind Bypassventile, von denen eines ein Unterdruckventil 3 und das andere ein Überdruckventil 4 ist. Das Unterdruckventil 3 öffnet sich ebenfalls selbsttätig, wenn sich im Kraftstofftank ein definierter Unterdruck einstellt. Das Überdruckventil 4 öffnet sich selbsttätig, wenn sich im Kraftstofftank ein definierter Überdruck einstellt.

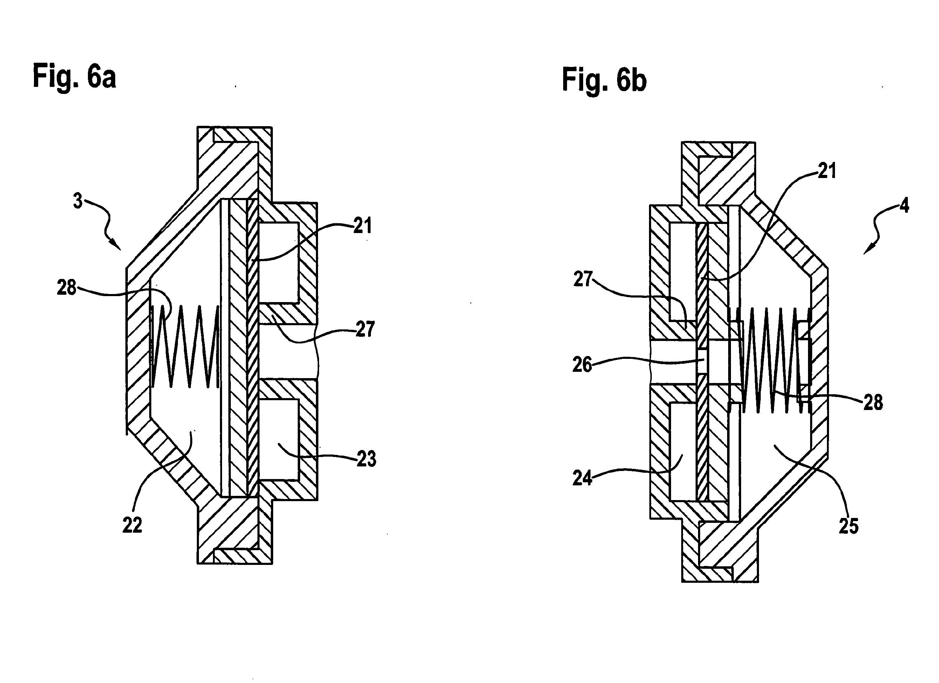

Wie am besten in Fig. 6a und 6b dargestellt, weisen die beiden Tankdruckregelventile 3, 4 jeweils zwei durch eine Membran 21 getrennte Kammem 22, 23; 24, 25 auf, von denen nach der Montage der Ventileinheit 1 jeweils eine 22; 24 mit dem Kraftstofftank und eine 23; 25 mit dem Aktivkohlefilter kommuniziert. Bei dem Unterdruckventil 3 in Fig. 6a ist die mit dem Kraftstofftank kommunizierende Unterdruckkammer 22 vom Tankabsperrventil 2 abgewandt, während die andere, mit dem Aktivkohlefilter kommunizierende Kammer 23 dem Tankabsperrventil 2 zugewandt ist. Bei dem Überdruckventil 4 in Fig. 6b ist hingegen die mit dem Kraftstofftank kommunizierende Überdruckkammer 24 dem Tankabsperrventil 2 zugewandt, während die andere, mit dem Aktivkohlefilter kommunizierende Kammer 25 vom Tankabsperrventil 2 abgewandt ist. Wie am besten in Fig. 6b dargestellt, ist die Membran 21 jedes Ventils 3, 4 mit einer Öffnung 26 versehen und liegt bei geschlossenem Ventil 3, 4 um die Öffnung 26 herum auf einem zylindrischen Rohrstutzen 27 auf, durch den bei dem Unterdruckventil 3 in Fig. 6a die Unterdruckkammer 22 mit dem Kraftstofftank und bei dem Überdruckventil 4 in Fig. 6b die andere Kammer 25 mit dem Aktivkohlefilter kommuniziert. Die Membran 21 wird von einer Feder 28 gegen das freie obere Ende des Rohrstutzens 27 angepresst und sorgt dafür, dass die beiden Kammem 22, 23; 24, 25 bei geschlossenem Ventil 3, 4, d.h. normalerweise, nicht miteinander kommunizieren. Im Fall eines stärkeren Unterdrucks im Kraftstofftank wird die Membran 21 des Unterdruckventils 3 infolge des Unterdrucks in der durch den Rohrstutzen 27 mit dem Kraftstofftank kommunizierenden Unterdruckkammer 22 entgegen der Kraft der Feder 28 vom Rohrstutzen 27 abgehoben, wodurch die beiden Kammem 22, 23 unter Öffnen des Ventils 3 miteinander verbunden werden. Im Falle eines stärkeren Überdrucks im Kraftstofftank wird die Membran 21 des Überdruckventils 4 durch den Druck in der Überdruckkammer 24 entgegen der Kraft der Feder 28 vom Rohrstutzen 27 abgehoben, wodurch die beiden Kammem 24, 25 ebenfalls unter Öffnen des Ventils 4 miteinander verbunden werden.

Die Überdruckkammer 24 des Überdruckventils 4 und die Unterdruckkammer 22 des Unterdruckventils 3 kommunizieren durch den Innenraum 14 des Tankabsperrventils 2 hindurch mit dem Tankanschluss 8, während die andere Kammer 25 des Überdruckventils 4 und die andere Kammer 22 des Unterdruckventils 3 durch den Innenraum 15 des Tankabsperrventils 2 hindurch mit dem Filteranschluss 9 kommunizieren.

Die Ventileinheit kann nicht nur in stehender Einbaulage, wie in Fig. 1 dargestellt, und in liegender Einbaulage, wie in Fig. 5 dargestellt, sondern auch in jeder beliebigen dazwischen liegenden Ausrichtung montiert werden, wobei in sämtlichen Fällen die beiden Anschlüsse 8, 9 schräg nach unten weisen und an der tiefsten Stelle in die jeweilige Kammer münden, so dass ein guter Kondensatablauf sichergestellt ist.

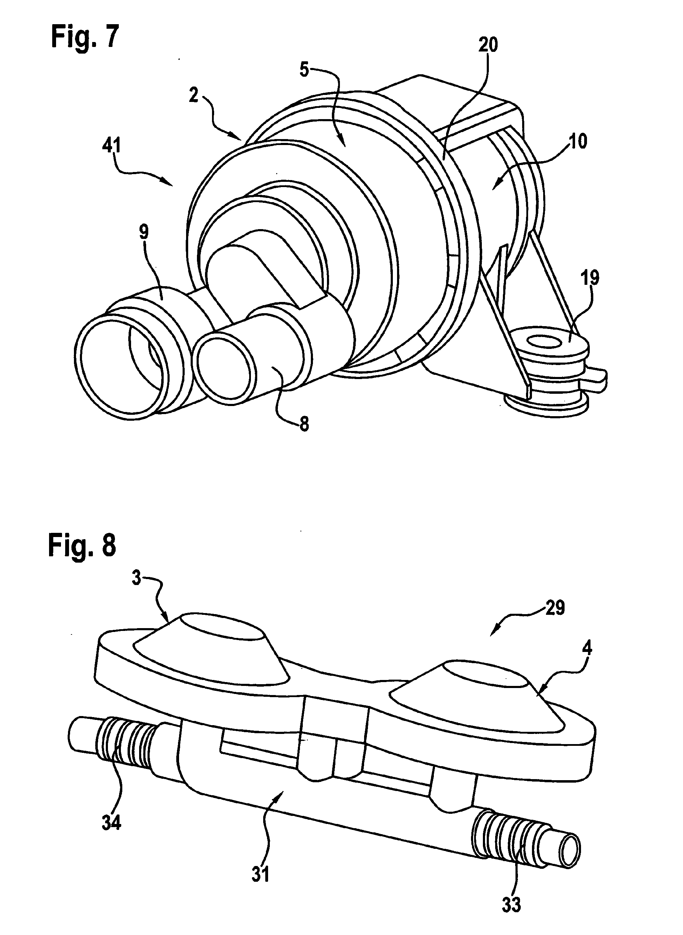

Das in Fig. 7 dargestellte Tankabsperrventil 2 weist dieselbe Konstruktion wie das Tankabspenventil 2 in den Figuren 1, 2, 3 und 5 auf, bildet jedoch eine separate Ventileinheit 41, die getrennt von einer aus den beiden Tankdruckregelventilen 3 und 4 bestehenden, in den Figuren 8 bis 13 dargestellten Ventileinheit 29 bzw. 30 montiert werden kann, zum Beispiel die Ventileinheit 41 außerhalb des Kraftstofftanks und eine der beiden Ventileinheiten 29, 30 innerhalb des Kraftstofftanks.

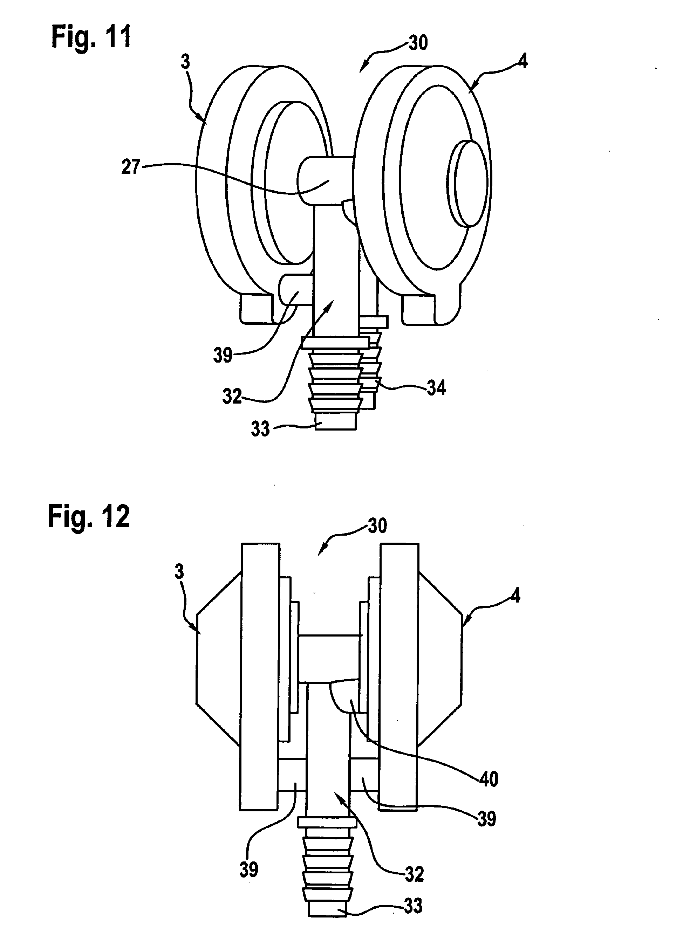

Bei der in den Figuren 8 bis 10 dargestellten Ventileinheit 29 weisen die beiden Tankdruckregelventile, d.h. das Unterdruckventil 3 und das Überdruckventil 4, dieselbe Ausrichtung auf und sind nebeneinander entlang eines Anschlussteils 31 angeordnet, während bei der Ventileinheit 30 in den Figuren 11 bis 13 die beiden Tankdruckregelventile 3, 4 entgegengesetzte Ausrichtungen aufweisen und an einem Ende eines Anschlussteils 32 angeordnet sind.

Bei beiden Ventileinheiten 29, 30 sind die mit dem Kraftstofftank kommunizierende Unterdruckkammer 22 des Unterdruckventils 3 und die ebenfalls mit dem Kraftstofftank kommunizierende Überdruckkammer 24 des Überdruckventils 4 mit einem gemeinsamen Tankanschluss 33 der Ventileinheit 29, 30 verbunden, während die mit dem Aktivkohlefilter kommunizierende andere Kammer 23 des Unterdruckventils 3 und die ebenfalls mit dem Aktivkohlefilter kommunizierende andere Kammer 25 des Überdruckventils 4 mit einem gemeinsamen Filteranschluss 34 der Ventileinheit 29, 30 verbunden sind.

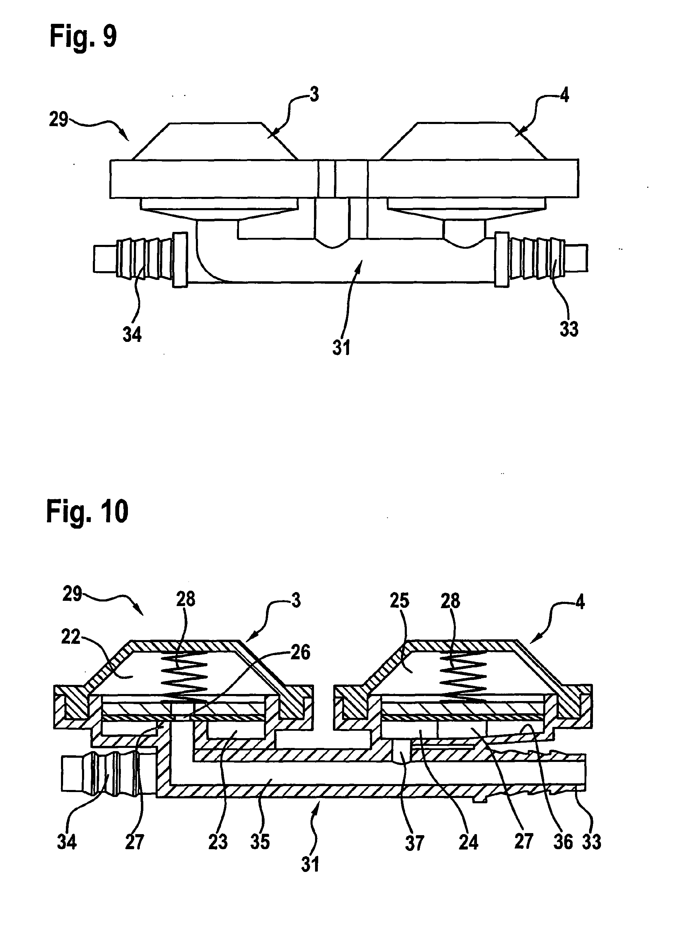

Wie am besten in Fig. 10 dargestellt, mündet bei der Ventileinheit 29 in den Figuren 8 bis 10 der Rohrstutzen 27 des Unterdruckventils 3 von unten her in die Unterdruckkammer 22, während sein unteres Ende durch eine nach der Montage der Ventileinheit 29 horizontal ausgerichtete Röhre 35 im Anschlussteil 31 mit dem Tankanschluss 33 kommuniziert, so dass kondensierender Kraftstoff aus der Unterdruckkammer 22 durch den Rohrstutzen 21 zum Tankanschluss 33 abfließen kann. Die Überdruckkammer 24 des Überdruckventils 4 wird an ihrer Unterseite von einem schrägen Boden 36 begrenzt und kommuniziert an ihrer tiefsten Stelle durch einen Durchlass 37 mit der zum Tankanschluss 33 führenden Röhre 35, so dass das Kondensat aus der Überdruckkammer 24 ebenfalls vollständig zum Tankanschluss 33 abfließen kann.

Umgekehrt mündet bei der Ventileinheit 29 der Rohrstutzen 27 des Überdruckventils 4 von unten her in die andere Kammer 25, während sein unteres Ende durch eine nach der Montage der Ventileinheit 29 parallel zu der Röhre 35 ausgerichtete Röhre (nicht sichtbar) im Anschlussteil 31 mit einem Filteranschluss 34 kommuniziert, so dass kondensierender Kraftstoff aus der Kammer 25 durch den Rohrstutzen 21 zum Filteranschluss 34 abfließen kann. Die andere Kammer 23 des Unterdruckventils 3 wird an ihrer Unterseite ebenfalls von einem schrägen Boden (nicht sichtbar) begrenzt und kommuniziert an ihrer tiefsten Stelle durch einen Durchlass (nicht sichtbar) mit der zum Filteranschluss 34 führenden Röhre, so dass das Kondensat aus der Kammer 23 ebenfalls vollständig zum Filteranschluss 34 abfließen kann.

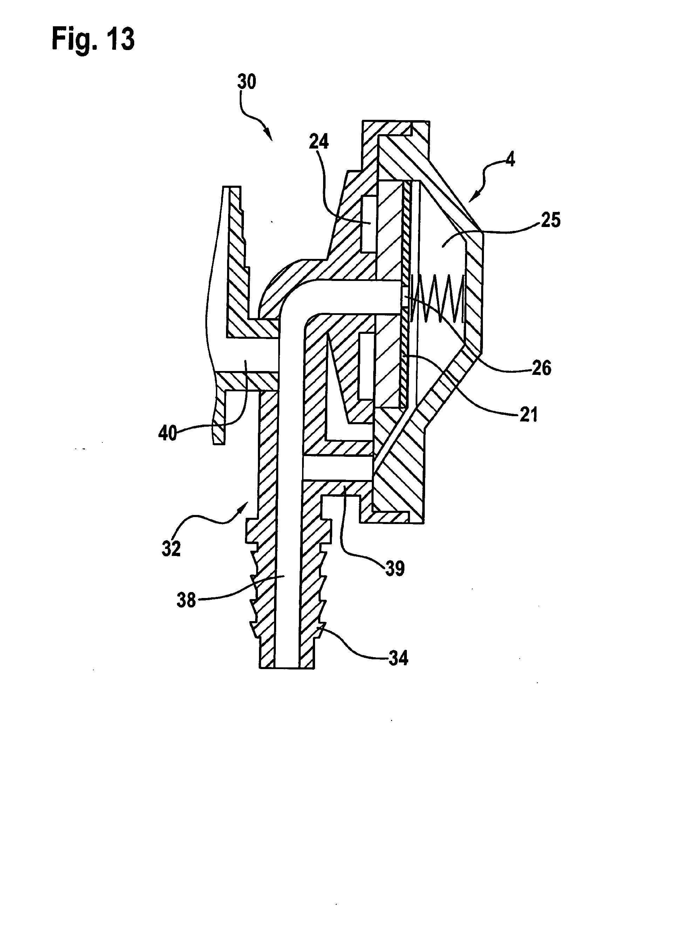

Wie am besten in Fig. 13 dargestellt, kommuniziert bei der Ventileinheit 30 in den Figuren 11 bis 13 die Kammer 25 des Überdruckventils 4 nicht nur durch den Rohrstutzen 27 sondern zusätzlich durch einen weiteren Durchlass 39 an der tiefsten Stelle der Kammer 25 mit einer zum Filteranschluss 34 führenden vertikalen Röhre 38 im Anschlussteil 32, so dass Kondensat aus der Kammer 25 durch den Durchlass 39 und die Röhre 38 zum Filteranschluss 34 abfließen kann. Die Überdruckkammer 24 des Überdruckventils 4 ist ähnlich wie die Überdruckkammer 24 beim Überdruckventil 4 der Ventileinheit 29 durch einen einzigen, an der tiefsten Stelle der Kammer 24 angeordneten Durchlass 40 mit der vertikalen Röhre 38 im Anschlussteil 32 verbunden, wie in Fig. 12 dargestellt.

Das Unterdruckventil 3 (in Fig. 13 nur teilweise dargestellt) weist einen entsprechenden Aufbau auf, wobei jedoch die andere Kammer 23 durch einen Durchlass 40 an ihrer tiefsten Stelle mit der zum Filteranschluss 34 führenden vertikalen Röhre 38 kommuniziert, während die Unterdruckkammer (nicht sichtbar) durch den Rohrstutzen 27 und einen weiteren Durchlass 39 an der tiefsten Stelle der Unterdruckkammer mit einer zur Röhre 38 parallelen, zum Tankanschluss 33 führenden Röhre im Anschlussteil 32 kommuniziert, wie am besten in Fig. 11 und 12 dargestellt.

### BEZUGSZEICHENLISTE

- 1: Ventileinheit
- 2: Tankabsperrventil
- 3: Unterdruckventil
- 4: Überdruckventil
- 5: Ventilteil Tankabsperrventil
- 6: Ventilsitz
- 7: Ventilglied
- 8: Tankanschluss Tankabsperrventil
- 9: Filteranschluss Tankabsperrventil
- 10: Ventilbetätigungsteil Tankabsperrventil
- 11: Elektromagnetspule
- 12: Anker
- 13: Längsmittelachse
- 14: Innenraum
- 15: Innenraum
- 16: Schrägfläche
- 17: Schrägfläche
- 18: Längsmittelebene
- 19: Befestigungsmittel
- 20: Spannring
- 21: Membran
- 22: Unterdruckkammer
- 23: andere Kammer
- 24: Überdruckkammer
- 25: andere Kammer
- 26: Öffnung
- 27: Rohrstutzen
- 28: Feder
- 29: Ventileinheit
- 30: Ventileinheit
- 31: Anschlussteil
- 32: Anschlussteil
- 33: Tankanschluss
- 34: Filteranschluss
- 35: Röhre
- 36: schräger Boden
- 37: Durchlass
- 38: Röhre
- 39: weiterer Durchlass
- 40: Durchlass
- 41: Ventileinheit

## Patentansprüche

1. Einrichtung zur Entlüftung und Belüftung eines Kraftstofftanks, mit einem Tankabsperrventil und zwei Tankdruckregelventilen, von denen eines im Falle eines Unterdrucks im Kraftstofftank und eines im Falle eines Überdrucks im Kraftstofftank öffnet, wobei eine aus einem oder mehreren der Ventile bestehende Ventileinheit stehend und liegend montierbar ist und einen mit dem Kraftstofftank kommunizierenden Tankanschluss und einen mit einem Aktivkohlefilter kommunizierenden Filteranschluss aufweist, **dadurch gekennzeichnet, dass** die beiden Anschlüsse (8, 9; 33, 34) allgemein parallel ausgerichtet sind, wobei sie bei stehender Einbaulage der Ventileinheit (1; 41; 30) nach unten und bei liegender Einbaulage der Ventileinheit (1; 29) in seitliche Richtung(en) weisen und an oder nahe der Unterseite der Ventileinheit (1; 41; 29) angeordnet sind.

2. Einrichtung nach Anspruch 1, **dadurch gekennzeichnet, dass** die Ventileinheit (1; 41) zwei in Bezug zueinander drehbare Teile (5, 10) umfasst, von denen eines (10) mit Befestigungsmitteln (19) zum Befestigen der Ventileinheit (2) an einer Halterung und eines (5) mit den beiden Anschlüssen (8, 9) versehen ist.

3. Einrichtung nach Anspruch 2, **gekennzeichnet durch** Mittel (20) zum Fixieren der beiden Teile (5, 10) in Bezug zueinander in einer beliebigen Drehlage.

4. Einrichtung nach einem der Ansprüche 1 bis 3, **dadurch gekennzeichnet, dass** die beiden Anschlüsse (8, 9) bei liegender Einbaulage der Ventileinheit (1; 41) in dieselbe Richtung weisen.

5. Einrichtung nach einem der Ansprüche 1 bis 3, **dadurch gekennzeichnet, dass** die beiden Anschlüsse (33, 34) bei liegender Einbaulage der Ventileinheit (29) in entgegengesetzte Richtungen weisen.

6. Einrichtung nach einem der vorangehenden Ansprüche, **dadurch gekennzeichnet, dass** jedes der beiden Tankdruckregelventile (3; 4) zwei durch eine Membran (21) getrennte Kammem (22, 23; 24, 25) aufweist, und dass die Kammem (22, 23; 24, 25) jeweils paarweise mit einem der beiden Anschlüsse (8, 9; 33, 34) kommunizieren.

7. Einrichtung nach Anspruch 6, **dadurch gekennzeichnet, dass** die Kammem (22, 23; 24, 25) jeweils an ihrer tiefsten Stelle durch eine Öffnung (26) oder einen Durchlass (37, 39, 40) mit einem der beiden Anschlüsse (8, 9; 33, 34) kommunizieren.

8. Einrichtung nach einem der vorangehenden Ansprüche, **dadurch gekennzeichnet, dass** jeder der beiden Anschlüsse (8, 9) in einen Innenraum (14, 15) der Ventileinheit (1; 41) mündet, und dass die Einmündungen der Anschlüsse (8, 9) in die Innenräume (14 bzw. 15) sowohl bei stehender und bei liegender Einbaulage an der tiefsten Stelle des jeweiligen Innenraums (14 bzw. 15) angeordnet sind.

9. Einrichtung nach Anspruch 8, **dadurch gekennzeichnet, dass** die Einmündungen mindestens zum Teil von schrägen, zu den Einmündungen hin nach unten geneigten Flächen (16, 17) umgeben sind.

10. Einrichtung nach einem der Ansprüche 1 bis 9, **dadurch gekennzeichnet, dass** die Ventileinheit (1) die beiden Tankdruckregelventile (3, 4) und das mit den beiden Anschlüssen (8, 9) versehene Tankabsperrventil (2) umfasst, und dass die beiden Tankdruckregelventile (3, 4) durch das Tankabsperrventil (2) hindurch mit den beiden Anschlüssen (8, 9) kommunizieren.

11. Einrichtung nach einem der Ansprüche 1 bis 9, **dadurch gekennzeichnet, dass** die Ventileinheit (41) nur das Tankabsperrventil (2) umfasst.

12. Einrichtung nach einem der Ansprüche 1 bis 9, **dadurch gekennzeichnet, dass** die Ventileinheit (29, 30) nur die beiden Tankdruckregelventile (3, 4) umfasst.
